# EUROPEAN PATENT SPECIFICATION

(11) **EP 3 937 650 B1**
(45) Date of publication and mention of the grant of the patent: **15.11.2023**
(21) Application number: 19715287.9
(22) Date of filing: 14.03.2019
(51) Int. Cl.: A23G 1/30

(54) **CHOCOLATE-BASED FOOD COMPOSITION**
NAHRUNGSMITTELZUSAMMENSETZUNG AUF SCHOKOLADENBASIS
COMPOSITION ALIMENTAIRE À BASE DE CHOCOLAT

(43) Date of publication of application: 19.01.2022
(73) Proprietor: General Mills, Inc., Minneapolis, MN 55426 (US)
(72) Inventor: BOCK, Kevin, Minneapolis, MN 55408 (US)
(74) Representative: Dehns
(86) International application number: PCT/US2019/022178
(87) International publication number: WO 2020/185231

(56) References cited:
- EP-A1- 1 025 763
- EP-B1- 1 025 763
- WO-A1-92/16112
- WO-A1-95/14392
- CN-A- 109 418 489
- CN-B- 103 907 736
- US-A- 5 439 700
- US-A1- 2006 088 652
- US-A1- 2010 278 985
- US-A1- 2011 020 502
- ROSSELL J B: "Fractionation of Lauric Oils", JOURNAL OF THE AMERICAN OIL CHEMISTS' SOC,, vol. 62, no. 2, 1 February 1985 (1985-02-01), pages 385-390, XP001629989,

## Description

### BACKGROUND

Chocolate is a commonly enjoyed food around the world. Many countries have a legal standard of identity for various forms of chocolate to ensure that consumers can identify authentic chocolate in the marketplace. Most countries' legal standards for chocolate specify a minimum cocoa butter content either explicitly, or as a consequence of requiring a defined amount of cocoa liquor content. One of the reasons that consumers find chocolate enjoyable is a distinct mouthfeel attributed to cocoa butter's quick melting characteristics in the mouth, and "snap" upon breaking it or biting into it.

The quick melting characteristics of cocoa butter in chocolate also result in chocolate being difficult to handle, transport, or store at temperatures nearing or exceeding 90° F (32 °C). As a result of its poor handling characteristics, chocolate is generally not included in many shelf stable foods, such as snack bars or confections, that may experience temperature abuse. In addition, cocoa butter in chocolate can migrate from the chocolate to other ingredients in a shelf stable food over time. As a result, compound coatings, which replace cocoa butter with other vegetable fats that are more stable, are typically used in shelf stable foods. As an example prior art document WO 95/14392 A1 discloses a chocolate material encapsulating a filling fat composition.

### SUMMARY

The present disclosure relates to a food composition containing chocolate.

A food is disclosed herein, the food including a food piece and a coating on at least a portion of a surface of the food piece. The coating is solid at 110° F (43 °C), and consists essentially of 90% to 97% chocolate and 3% to 10% palm stearin having a melt point of at least 130° F (54 °C). In some embodiments, the coating consists of the chocolate and the palm stearin.

In some embodiments, a food provided herein can include a soft food piece. In some embodiments, a soft food piece can have a fat content of at least 25% by weight. In some embodiments, a soft food piece can include at least 50% by weight nut butter. In some embodiments, a soft food piece can include a ganache or a coconut cream. In some embodiments, a soft food piece can include a jelly or a ready-to-eat cookie dough.

In some embodiments, a food provided herein can include a grain-based food piece. In some embodiments, a grain-based food piece can be a granola bar, a granola cup, a cookie, a cracker, or a ready-to-eat cookie dough.

In some embodiments, a food provided herein can include a nut or nut piece.

In some embodiments, a food provided herein can further include a particulate or a powder adhered to the coating.

Also disclosed herein is a method of making a food, the method including applying a coating to at least a portion of a surface of a food piece, the coating being a liquid at an application temperature of at least 120° F (49 °C), and consisting essentially of 90% to 97% chocolate and 3% to 10% palm stearin having a melt point of at least 130° F (54 °C); and allowing the coating to harden on the food piece to make the food. The coating consists essentially of the chocolate and the palm stearin.

In some embodiments of a method provided herein, the food piece can comprise a soft food piece. In some embodiments, a soft food piece can have a fat content of at least 25% by weight. In some embodiments, a soft food piece can include at least 50% by weight nut butter. In some embodiments, a soft food piece can include a ganache or a coconut cream. In some embodiments, a soft food piece can include a jelly or a ready-to-eat cookie dough.

In some embodiments of a method provided herein, the food piece can comprise a grain-based food piece. In some embodiments, a grain-based food piece can be a granola bar, a granola cup, a cookie, a cracker, or a ready-to-eat cookie dough.

In some embodiments of a method provided herein, the food piece can comprise a nut or nut piece.

In some embodiments of a method provided herein, the method can further include applying a particulate or a powder to at least a portion of the coating.

These and various other features and advantages will be apparent from a reading of the following detailed description.

### DETAILED DESCRIPTION

Storage, transportation, and handling temperatures for shelf stable products often approach or exceed 90° F (32 °C). For example, trucks that transport shelf stable items are generally not cooled, and it is not uncommon for a distribution truck interior to exceed 100° F (38 °C), especially in hot, sunny locations. Current chocolate products are not stable at temperatures approaching or exceeding 100° F (38 °C). Thus, compound coatings, which replace cocoa butter with other, more stable vegetable fats, are generally used instead. However, compound coatings often fail to achieve the unique eating experience of real chocolate, and are generally perceived to be less desirable than real chocolate.

The present disclosure relates to the discovery that a chocolate-based composition can be produced that contains at least 90% chocolate, but is significantly more temperature stable than chocolate.

As used herein, "chocolate" refers to a composition according to the United States Code of Federal Regulations Title 21 §163.111, §163.123, §163.124, §163.130, and including at least 15% cocoa butter, up to 5% milk fat, and no other fats. In some embodiments, chocolate can contain at least 20% fat (e.g., 20% to 50%, or about 25% to about 30%). Cocoa butter in a chocolate can be included in the chocolate from chocolate liquor or purified cocoa butter, or a combination thereof. For example, a milk chocolate can contain up to 5% milk fat by weight, with the balance of the fat content of the milk chocolate being cocoa butter from a combination of chocolate liquor and purified cocoa butter. In another example, semi-sweet chocolate can have a fat content where all of the fat is cocoa butter, and the cocoa butter comes from chocolate liquor. Chocolate suitable for use herein has a melting point from about 88° F (31 °C) to about 98° F (36 °C) and includes, for example, chocolate liquor, semi-sweet chocolate, sweet chocolate, milk chocolate, and white chocolate.

In some embodiments, chocolate can contain cocoa butter and no other fat. In some embodiments, chocolate can include about 20% to about 50% (e.g., about 25% to about 35%) by weight cocoa butter and no other fats. Chocolate suitable for use herein can include from 0% (e.g., white chocolate) to 100% (e.g., chocolate liquor) chocolate liquor. In some embodiments, chocolate suitable for use herein can contain from about 35% to about 55% (e.g., about 40% to about 50%) chocolate liquor. In some embodiments, chocolate can include up to 70% (e.g., from about 45% to about 65%, about 50% to about 60%, or as low as 0% for unsweetened chocolate) by weight sucrose. In some embodiments, chocolate can contain less than 1.5% by weight of an emulsifier (e.g., lecithin, polyglycerol polyricinoleate, or the like, or combinations thereof). In some embodiments, chocolate can contain up to 1.5% by weight of a flavor (e.g., vanilla extract, artificial flavor, or the like, or combinations thereof).

Provided herein is a chocolate-based composition consisting essentially of 90% to 97% by weight chocolate and 3% to 10% by weight palm stearin having a melting point as measured by Mettler Drop Point of at least 130° F (54 °C) (e.g., about 140° F (60 °C)). The chocolate-based composition consists essentially of chocolate and palm stearin (i.e., contain less than 1%, or less than 0.5% other ingredients). In some embodiments, a chocolate-based composition can consist of chocolate and palm stearin. It is to be understood that a chocolate containing higher fat content (e.g., a chocolate liquor or a semi-sweet chocolate) can be combined with a higher amount of palm stearin (e.g., about 5% to about 10%) to achieve the desired texture and hardening characteristics described herein, whereas a chocolate containing lower fat content (e.g., a sweet chocolate or a milk chocolate) can be combined with a lower amount of palm stearin (e.g., about 3% to about 8%) to achieve the desired texture and hardening characteristics described herein.

A chocolate-based composition provided herein can be produced any appropriate method. For example, a liquid chocolate (i.e., a chocolate at a temperature at or above its melting point) can be combined with a liquid palm stearin (i.e., a palm stearin at or above its melting point) and mixed to homogeneity to produce a chocolate-based composition. In another example, a solid chocolate and a solid palm stearin can be combined then heated to a temperature at or above the melting point of the palm stearin and mixed to homogeneity to produce a chocolate-based composition. In yet another example, a solid chocolate can be combined with a liquid palm stearin and mixed until the chocolate is melted and the mixture is homogeneous to make a chocolate-based composition. A chocolate-based composition can be used as a liquid in a method described herein, or allowed to harden (e.g., become a solid or semi-solid) for later use. A solid chocolate-based composition can be melted for use in a method provided herein by heating to a temperature at or above its melting point as described below.

A chocolate-based composition provided herein has a benefit of being fluid at a temperature of at least about 120° F (49 °C) (e.g., about 125° F (52 °C)) once melted, hardening quickly after being applied to a surface, and remaining solid at about 110° F (43 °C) once hardened. This provides for a chocolate-based composition that can be easily applied as a liquid then hardened as a coating or a layer on a food piece, while being stable during temperature abusive conditions (e.g., above 90° F (32 °C), or up to about 110° F (43 °C)) during transportation, storage, and the like. A chocolate-based composition provided herein hardens, once melted, at a temperature below 120° F (49 °C) (e.g., about 115° F (46 °C) to about 120° F (49 °C)). Preferably, a molten chocolate-based composition provided herein will harden (i.e., become semi-solid or solid, such that it stops flowing) within 1 minute (e.g., within 45 seconds, within 30 seconds, or within 15 seconds) at a temperature below 90° F (32 °C) when applied as a thin layer (e.g., less than 5 mm, or about 2 mm to about 3 mm) to a surface. A chocolate-based composition provided herein can have a melting point (i.e., begin to flow) at about 110° F (43 °C) to about 140° F (60 °C) (e.g., about 115° F (46 °C) to about 125° F (52 °C)).

A chocolate-based composition provided herein can be applied to a food piece as a coating on a portion or all of a surface of the food piece (e.g., grain-based food piece, confection, nut or nut piece, soft food piece), or applied as a layer between food pieces (e.g., crackers or cookies). For example, a chocolate-based composition provided herein can be applied as a topping or a footing on a grain-based food piece (e.g., a granola cup, a crunchy or chewy granola bar, a cookie, a cracker, a brownie, or the like). In another example, a chocolate-based composition provided herein can be applied as a coating on a soft food piece, such as a nut butter bite, jelly, ganache, a ready-to-eat cookie dough, a caramel, a nougat, or coconut cream. In yet another example, a chocolate-based composition provided herein can be applied to all or part of a surface of a whole nut or nut piece, or a cluster of nuts or nut pieces (e.g., a caramel and nut cluster).

A chocolate-based composition provided herein can be particularly suited to coating a soft food piece because the harder texture of the chocolate-based composition can be enjoyable when contrasted with the soft texture of the soft food piece. In addition, because a chocolate-based composition provided herein is particularly temperature stable, it can contribute to retaining a desired shape (e.g., spherical, bar, or cube) of a soft food piece.

A chocolate-based composition provided herein can provide a benefit as a coating for food pieces with a high fat content because the combination of cocoa butter and palm stearin in the chocolate-based composition is more resistant to softening from fats in food pieces than chocolate or compound coating. For example, in some embodiments, a chocolate-based composition can be used to coat a food piece (e.g., a soft food piece) that has a fat content of at least 25% (e.g., at least 30%) by weight of the food piece, such as a nut butter bite, a ganache, or a coconut cream.

In some embodiments, a soft food piece suitable for use with a chocolate-based composition can have a nut butter content of at least 50% by weight. See, for example, a nut butter as described in the co-pending patent application titled "Nut butter composition" by Bock, filed March 14, 2019.

Any appropriate method for applying a chocolate-based composition provided herein to a food piece can be used. For example, a method can include providing a liquid chocolate-based composition at an application temperature of at least 120° F (49 °C) (e.g., about 120°F (49 °C) to about 130° F (54 °C)), and applying the liquid chocolate-based composition to a surface of a food piece by, for example, dipping or submersing the food piece in the liquid chocolate-based composition, or by pouring or drizzling the liquid chocolate-based composition onto a surface of the food piece. A liquid chocolate-based composition can be allowed to harden on a surface of a food piece following application to the surface of the food piece. In some embodiments, a particulate (e.g., nuts or nut pieces, granola, rolled oats, confections, granulated salt, granulated sugar, or the like) or powder (e.g., powdered sugar, starch, cocoa powder, or the like) can be applied to at least a portion of a liquid chocolate-based composition on a surface of a food piece before the liquid chocolate-based composition hardens to adhere the particulate or powder to the chocolate-based food composition. In some embodiments, a second food piece (e.g., a cookie, a granola bar, or a cracker, or the like) can be applied to at least a portion of a liquid chocolate-based composition before the liquid chocolate-based composition hardens to make a layered food product or a sandwiched food product.

A liquid chocolate-based composition can be allowed to harden at a temperature below 120° F (49 °C) (e.g., below 115° F (46 °C)). In some embodiments, a liquid chocolate-based composition can be allowed to harden at a temperature below 100° F (38 °C) (e.g., below 90° F (32 °C), below 80° F (27 °C), or at about room temperature). In some embodiments, a liquid chocolate-based composition can be allowed to harden in a chilled environment (e.g. at a temperature below 65° F (18 °C), or below 60° F (15 °C)). In some embodiments, a food having a liquid chocolate-based composition on a surface can be passed through or placed in an appropriate piece of equipment (e.g., a cooling tunnel, or a refrigerator or a freezer) to hasten the rate of hardening of the chocolate-based composition.

A food comprising a food piece and a chocolate-based composition on a surface can be packaged in any appropriate packaging as multiple food pieces in a single package or a single food piece in a single package. A food comprising a food piece and a chocolate-based composition on a surface can have a shelf life of at least 6 months (e.g., at least 8 months, or at least 12 months). A food comprising a food piece and a chocolate-based composition on a surface can remain stable (i.e., the chocolate-based composition remains solid) at a temperature of 100° F (38 °C) for at least 18 hours (e.g., at least 24 hours, at least 3 days, or at least 4 days). In some embodiments, a food comprising a food piece and a chocolate-based composition on a surface can remain stable at a temperature of 110° F (43 °C) for at least 4 hours (e.g., at least 8 hours, or at least 24 hours).

The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

1. A food, comprising:
a. a food piece; and
b. a coating on at least a portion of a surface of the food piece, the coating being solid at 110°F (43 °C), and consisting essentially of:
i. 90% to 97% chocolate; and
ii. 3% to 10% palm stearin having a melt point of at least 130° F (54 °C).

2. The food of claim 1, wherein the coating consists of the chocolate and the palm stearin.

3. The food of claim 1 or 2, wherein the food piece comprises a soft food piece having at least one of a fat content of at least 25% by weight and at least 50% by weight nut butter.

4. The food of claim 3, wherein the soft food piece comprises a ganache, a coconut cream, a jelly or a ready-to-eat cookie dough.

5. The food of claim 1 or 2, wherein the food piece is a grain-based food piece, a granola bar, a granola cup, a cookie, a cracker, or a ready-to-eat cookie dough.

6. The food of claim 1 or 2, wherein the food piece comprises a nut or nut piece.

7. The food of any preceding claims, wherein the food further comprises a particulate or a powder adhered to the coating.

8. A method of making a food, comprising:
a. applying a coating to at least a portion of a surface of a food piece, the coating being a liquid at an application temperature of at least 120° F (49 °C), and consisting essentially of:
i. 90% to 97% chocolate; and
ii. 3% to 10% palm stearin having a melt point of at least 130° F (54 °C);
and
b. allowing the coating to harden on the food piece to make the food.

9. The method of claim 8, wherein the coating consists of the chocolate and the palm stearin.

10. The method of claim 8 or 9, wherein the food piece comprises a soft food piece having at least one of a fat content of at least 25% by weight and at least 50% by weight nut butter.

11. The method of claim 10, wherein the soft food piece comprises a ganache, a coconut cream, a jelly or a ready-to-eat cookie dough.

12. The method of claim 8 or 9, wherein the food piece is a grain-based food piece, a granola bar, a granola cup, a cookie, a cracker, or a ready-to-eat cookie dough.

13. The method of claim 8 or 9, wherein the food piece comprises a nut or nut piece.

14. The method of any of claims 8-13, further comprising applying a particulate or a powder to at least a portion of the coating.

## Patentansprüche

1. Nahrungsmittel, umfassend:
a. ein Nahrungsmittelstück; und
b. einen Überzug auf zumindest einem Teil einer Oberfläche des Nahrungsmittelstücks, wobei der Überzug bei 110 F (43 °C) fest ist und im Wesentlichen aus:
i. 90 % bis 97 % Schokolade; und
ii. 3 % bis 10 % Palmstearin mit einem Schmelzpunkt von mindestens 130 °F (54 °C) besteht.

2. Nahrungsmittel nach Anspruch 1, wobei der Überzug aus der Schokolade und dem Palmstearin besteht.

3. Nahrungsmittel nach Anspruch 1 oder 2, wobei das Nahrungsmittelstück ein weiches Nahrungsmittelstück mit einem Fettgehalt von mindestens 25 Gew.-% und/oder mindestens 50 Gew.-% Nussbutter umfasst.

4. Nahrungsmittel nach Anspruch 3, wobei das weiche Nahrungsmittelstück eine Ganache, eine Kokoscreme, ein Gelee oder einen verzehrfertigen Keksteig umfasst.

5. Nahrungsmittel nach Anspruch 1 oder 2, wobei das Nahrungsmittelstück ein Nahrungsmittelstück auf Kornbasis, ein Müsliriegel, ein Müslibecher, ein Keks, ein Cracker oder ein verzehrfertiger Keksteig ist.

6. Nahrungsmittel nach Anspruch 1 oder 2, wobei das Nahrungsmittelstück eine Nuss oder ein Nussstück umfasst.

7. Nahrungsmittel nach einem der vorstehenden Ansprüche, wobei das Nahrungsmittel ferner Teilchen oder Pulver, die auf dem Überzug haften bzw. das auf dem Überzug haftet, umfasst.

8. Verfahren zum Herstellen eines Nahrungsmittels, umfassend:
a. Aufbringen eines Überzugs auf zumindest einen Teil einer Oberfläche eines Nahrungsmittelstücks, wobei der Überzug bei einer Aufbringungstemperatur von mindestens 120 °F (49 °C) flüssig ist und im Wesentlichen aus:
i. 90 % bis 97 % Schokolade; und
ii. 3 % bis 10 % Palmstearin mit einem Schmelzpunkt von mindestens 130 °F (54 °C) besteht;
und
b. Härtenlassen des Überzugs auf dem Nahrungsmittelstück, um das Nahrungsmittel herzustellen.

9. Verfahren nach Anspruch 8, wobei der Überzug aus der Schokolade und dem Palmstearin besteht.

10. Verfahren nach Anspruch 8 oder 9, wobei das Nahrungsmittelstück ein weiches Nahrungsmittelstück mit einem Fettgehalt von mindestens 25 Gew.-% und/oder mindestens 50 Gew.-% Nussbutter umfasst.

11. Verfahren nach Anspruch 10, wobei das weiche Nahrungsmittelstück eine Ganache, eine Kokoscreme, ein Gelee oder einen verzehrfertigen Keksteig umfasst.

12. Verfahren nach Anspruch 8 oder 9, wobei das Nahrungsmittelstück ein Nahrungsmittelstück auf Kornbasis, ein Müsliriegel, ein Müslibecher, ein Keks, ein Cracker oder ein verzehrfertiger Keksteig ist.

13. Verfahren nach Anspruch 8 oder 9, wobei das Nahrungsmittelstück eine Nuss oder ein Nussstück umfasst.

14. Verfahren nach einem der Ansprüche 8-13, ferner umfassend das Aufbringen von Teilchen oder Pulver auf zumindest einen Teil des Überzugs.

## Revendications

1. Produit alimentaire, comprenant :
a. un aliment ; et
b. un revêtement sur au moins une partie d'une surface de l'aliment, le revêtement étant solide à 110 °F (43 °C) et étant essentiellement constitué de :
i. 90 % à 97 % de chocolat ; et
ii. 3 % à 10 % de stéarine de palme ayant un point de fusion d'au moins 130 °F (54 °C).

2. Produit alimentaire selon la revendication 1, le revêtement étant constitué du chocolat et de la stéarine de palme.

3. Produit alimentaire selon la revendication 1 ou 2, l'aliment comprenant un aliment mou ayant au moins l'un parmi une teneur en graisse d'au moins 25 % en poids et au moins 50 % en poids de beurre de noix.

4. Produit alimentaire selon la revendication 3, l'aliment mou comprenant une ganache, une crème de noix de coco, une gelée ou une pâte à cookies prête à manger.

5. Produit alimentaire selon la revendication 1 ou 2, l'aliment étant un aliment à base de graines, une barre de granola, une coupe de granola, un cookie, un cracker ou une pâte à cookies prête à manger.

6. Produit alimentaire selon la revendication 1 ou 2, l'aliment étant une noix ou un morceau de noix.

7. Produit alimentaire selon l'une quelconque des revendications précédentes, le produit alimentaire comprenant en outre une particule ou une poudre collée au revêtement.

8. Procédé de fabrication d'un produit alimentaire, comprenant :
a. une application d'un revêtement sur au moins une partie d'une surface d'un aliment, le revêtement étant un liquide à une température d'application d'au moins 120 °F (49 °C), et étant essentiellement constitué de :
i. 90 % à 97 % de chocolat ; et
ii. 3 % à 10 % de stéarine de palme ayant un point de fusion d'au moins 130 °F (54 °C) ; et
b. le fait de laisser le revêtement durcir sur l'aliment pour fabriquer le produit alimentaire.

9. Procédé selon la revendication 8, le revêtement étant constitué du chocolat et de la stéarine de palme.

10. Procédé selon la revendication 8 ou 9, l'aliment comprenant un aliment mou ayant au moins l'un parmi une teneur en graisse d'au moins 25 % en poids et au moins 50 % en poids de beurre de noix.

11. Procédé selon la revendication 10, l'aliment mou comprenant une ganache, une crème de noix de coco, une gelée ou une pâte à cookies prête à manger.

12. Procédé selon la revendication 8 ou 9, l'aliment étant un aliment à base de graines, une barre de granola, une coupe de granola, un cookie, un cracker ou une pâte à cookies prête à manger.

13. Procédé selon la revendication 8 ou 9, l'aliment étant une noix ou un morceau de noix.

14. Procédé selon l'une quelconque des revendications 8 à 13, comprenant en outre une application d'une particule ou d'une poudre sur au moins une partie du revêtement.
